Europäisches Patentamt
European Patent Office
Office européen des brevets

(19) (11) Veröffentlichungsnummer: **0 048 214**
**A2**

(12) **EUROPÄISCHE PATENTANMELDUNG**

(21) Anmeldenummer: 81810327.7

(51) Int. Cl.$^3$: C 08 F 8/30

(22) Anmeldetag: 12.08.81

(30) Priorität: 18.08.80 CH 6215/80

(43) Veröffentlichungstag der Anmeldung: 24.03.82 Patentblatt 82/12

(84) Benannte Vertragsstaaten: CH DE FR GB IT LI NL SE

(71) Anmelder: CIBA-GEIGY AG
Patentabteilung Postfach
CH-4002 Basel(CH)

(72) Erfinder: Zweifel, Hans, Dr.
Lothringerstrasse 93
CH-4056 Basel(CH)

(72) Erfinder: Furrer, Peter, Dr.
Brändelistalweg 26
CH-4103 Bottmingen(CH)

(72) Erfinder: Markert, Jürgen, Dr.
Im Guntengarten 32
CH-4107 Ettingen(CH)

(54) **Gefärbte lichtvernetzbare Polymere.**

(57) Unter der Einwirkung von Licht vernetzbare gefärbte Polymere mit einem Durchschnittsmolekulargewicht von mindestens 5000, die seitenständige Farbstoffgruppierungen der Formel I

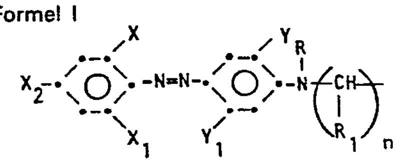 (1)

und seitenständige Imidylgruppierungen der Formel II

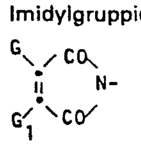 (11)

aufweisen, worin X, $X_1$, $X_2$, Y, $Y_1$, R, $R_1$, n, G und $G_1$ die im Patentanspruch angegebene Bedeutung haben, eignen sich zur Erzeugung von hoch lichtempfindlichen gefärbten Bildmaterialen, zur Herstellung von Druckplatten für das Offsetdruckverfahren und vor allem als sogenannte Photoresists zur Herstellung von gedruckten Schaltungen.

EP 0 048 214 A2

CIBA-GEIGY AG
Basel (Schweiz)

3-13015/ZFO

## Gefärbte lichtvernetzbare Polymere

Die Erfindung betrifft neue gefärbte lichtvernetzbare Polymere, Verfahren zu deren Herstellung und deren Verwendung zum Erzeugen von Abbildungen.

Es ist bekannt, dass man lichtvernetzbaren Polymeren zur Herstellung von Reliefbildern, Druckplatten, Photoresists und dergleichen Farbstoffe oder Pigmente zumischen kann, z.B. um ohne zusätzliche Massnahme direkt gefärbte Bilder zu erhalten oder aber um die Vorgänge beim Entwickeln der Bilder besser sichtbar zu machen.[vgl. z.B. belgische Patentschriften 620.175 und 634.216 sowie britische Patentschrift 1.128.850]. Diese zugemischten Farbstoffe oder Pigmente haben den Nachteil, dass sie beim Entwickeln der Bilder relativ leicht ausbluten bzw. ausgewaschen werden.

Es wurde nun gefunden, dass man unter Verwendung ausgewählter Azofarbstoffe gefärbte lichtvernetzbare Polymere herstellen kann, bei denen die Farbstoffe kovalent an das lichtvernetzbare Polymere gebunden sind. Dies verhindert ein Ausbluten oder Auswaschen der Farbstoffe bei der Weiterverarbeitung der Polymeren, besonders beim Entwickeln der damit erzeugbaren Abbildungen, wobei jedoch die Photoempfindlichkeit der lichtvernetzbaren Polymeren durch die kovalent gebundenen Farbstoffkomponenten nicht beeinträchtigt wird.

Gegenstand der Erfindung sind somit neue gefärbte lichtvernetzbare Polymere, deren Durchschnittsmolekulargewicht $M_w$ mindestens 5000 beträgt und die seitenständige Farbstoffgruppierungen der Formel I

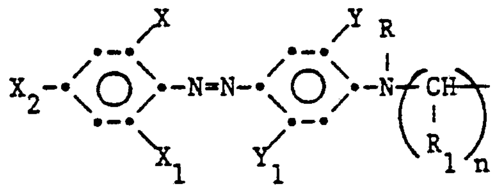

(I)

und seitenständige Imidylgruppierungen der Formel II

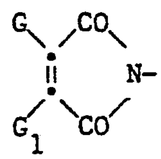

(II)

aufweisen, worin G und $G_1$ unabhängig voneinander $C_{1-4}$-Alkyl oder zusammen gegebenenfalls durch Methyl substituiertes Trimethylen oder Tetramethylen,
X, $X_1$ und $X_2$ unabhängig voneinander Wasserstoff, Halogen, $C_{1-8}$-Alkyl, -CN, $-CF_3$ oder $-NO_2$,
Y Wasserstoff oder $C_{1-8}$-Alkoxy,
$Y_1$ Wasserstoff, $C_{1-8}$-Alkyl, $C_{2-8}$-Alkanoylamino oder Benzoylamino,
R $C_{1-16}$-Alkyl,
$R_1$ Wasserstoff oder $C_{1-8}$-Alkyl und
n eine ganze Zahl von 1-6 bedeuten, wobei der Anteil an Gruppierungen der Formel I 0,01 bis 10 Prozent und der Anteil an Gruppierungen der Formel II 30 bis 99,99 Prozent, bezogen auf die Anzahl der wiederkehrenden Strukturelemente des Polymeren, betragen.

Vorzugsweise beträgt der Anteil an Gruppierungen der Formel I 0,5 bis 5 Prozent, bezogen auf die Anzahl der wiederkehrenden Strukturelemente des Polymeren, während der Anteil an Gruppierungen der Formel II bevorzugt zwischen 30 und 99,5 Prozent, bezogen auf die Anzahl der wiederkehrenden Strukturelemente des Polymeren, liegt. Die erfindungsgemässen Polymeren weisen zweckmässig ein Durchschnittsmolekulargewicht $M_w$ von 30 000 bis ca. 5 000 000 und insbesondere ein Durchschnittsmolekulargewicht von etwa 50 000 bis 2 000 000 auf. Das Durchschnittsmolekulargewicht $M_w$ ist das Gewichtsmittel und wird nach bekannten Methoden, z.B. mittels Streulichtbestimmung oder Gelpermeationschromatographie, bestimmt.

Bei den erfindungsgemässen Polymeren handelt es sich z.B. um Polyäther, Polyimine, Polymere mit freien Glycidylgruppen, Polysaccharide, Gelatine und vor allem um Polymere, welche durch Homo- oder Copolymerisation von C=C-Doppelbindungen enthaltenden Monomeren erhalten werden.

Die erfindungsgemässen Polymeren lassen sich nach an sich bekannten Synthesemethoden zur Herstellung von Makromolekülen mit seitenständigen Gruppen herstellen. Grundsätzlich kommen folgende Wege in Betracht:

1. Einbau der Gruppierungen der Formeln I und II in eine bestehende Polymerkette;

2. Aufbau der Polymerkette aus Monomeren, welche die Farbstoffgruppierungen der Formel I bzw. die Imidylgruppierungen der Formel II bereits enthalten, wobei die Polymerkette durch Polymerisation aufgebaut werden kann.

Teilweise können mit den Methoden 1 und 2 gleiche Produkte erhalten werden, so dass sich je nach Art der funktionellen Gruppen wahlweise die Methode 1 oder 2 anwenden lässt. Werden die Reste der Formeln I und II in eine bereits bestehende Polymerkette eingebaut, so erfolgt dieser Einbau entweder durch eine Kondensationsreaktion oder durch eine Additionsreaktion unter gleichzeitiger Oeffnung eines Ringsystems, z.B. einer Dicarbonsäureanhydridgruppe oder einer Epoxidgruppe.

Nach der vorerwähnten Aufbau-Methode können erfindungsgemässe Polymere z.B. dadurch hergestellt werden, dass man eine Verbindung der Formel Ia

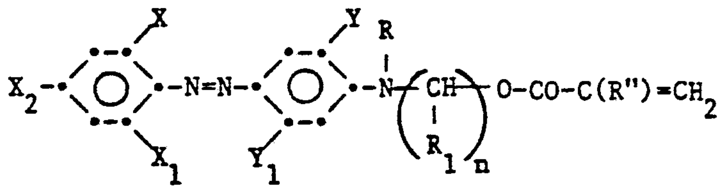 (Ia) ,

worin für X, $X_1$, $X_2$, Y, $Y_1$, R, $R_1$ und n das unter Formel I Angegebene gilt und R" Wasserstoff oder Methyl bedeutet, und eine Verbindung der Formel IIa

$$\text{Imidyl-}(R_2)_q\text{-}Q \qquad \text{(IIa)} ,$$

worin "Imidyl" einen Rest der Formel II darstellt,
$R_2$ gegebenenfalls durch Heteroatome unterbrochenes und/oder durch Alkyl substituiertes Alkylen mit insgesamt 2-18 C-Atomen und mindestens 2 C-Atomen in der Alkylenkette, $C_{5-6}$-Cycloalkylen oder Phenylen,
q 0 oder 1 und
Q bei q = 0 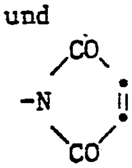 oder -NHCO-Alkenyl und bei q = 1 -CO-O-Alkenyl, -O-Alkenyl, -O-CO-Alkenyl, -NHCO-Alkenyl oder 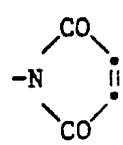 bedeuten, wobei Alkenylteile 2-4 C-Atome aufweisen,
gegebenenfalls in Gegenwart von Comonomeren polymerisiert, wobei das Molverhältnis von Verbindung der Formel Ia + Verbindung der Formel IIa zu Comonomerem 30,01 : 69,99 bis 100 : 0, bevorzugt 30,5 : 69,5 bis 100 : 0, und das Molverhältnis von Verbindung der Formel Ia zu Verbindung der Formel IIa 0,01 : 99,99 bis 1 : 3, bevorzugt 0,5 : 99,5 bis 1 : 6, betragen.

Q stellt dabei vorzugsweise $-CO-O-C(CH_3)=CH_2$ oder $-CO-O-CH=CH_2$ dar (q = 1).

Nach der vorerwähnten Einbau-Methode lassen sich erfindungsgemässe Polymere z.B. dadurch herstellen, dass man eine Verbindung der

Formel Ib

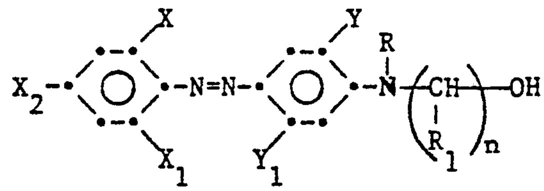

(Ib) ,

worin für X, $X_1$, $X_2$, Y, $Y_1$, R, $R_1$ und n das unter Formel I Angegebene gilt, und eine Verbindung der Formel IIb

$$\text{Imidyl-}(R_2)_q\text{-}Q' \qquad \text{(IIb)} ,$$

worin "Imidyl" einen Rest der Formel II darstellt,
$R_2$ und q die unter Formel IIa angegebenen Bedeutungen haben und
Q' bei q = 0 $-(CH_2)_p-CH\underset{O}{-}CH_2$ mit p = 1 oder 2
und bei q = 1 -OH, -SH, $-NH_2$, -NHR', -COOH oder -COCl
mit R' = $C_{1-5}$ -Alkyl bedeutet,
mit einem Polymeren mit entsprechenden funktionellen Gruppen in einem Verhältnis von Verbindung der Formel Ib + Verbindung der Formel IIb von 30,01 : 100 bis 1:1, bezogen auf die Anzahl der wiederkehrenden Strukturelemente des Polymeren, zur Reaktion bringt, wobei das Molverhältnis von Verbindung der Formel Ib zu Verbindung der Formel IIb 0,01 : 99,99 bis 1:3, bevorzugt 0,5 : 99,5 bis 1:6, beträgt.

Q' stellt bevorzugt -OH dar.

Verbindungen der Formel IIb, worin Q' -COCl oder -COOH darstellt, lassen sich beispielsweise mit Polymeren umsetzen, die freie OH-, $NH_2$-, NHR'- oder SH-Gruppen aufweisen. Verbindungen der Formel Ib und Verbindungen der Formel IIb, worin Q' -OH, -SH, $-NH_2$, -NHR' oder $-(CH_2)_p-CH\underset{O}{-}CH_2$ bedeutet, eignen sich z.B. zur Umsetzung mit Polymeren, die Anhydrid- oder COOH-Gruppen aufweisen. Schliesslich können Verbindungen der Formel Ib und Verbindungen der Formel IIb, worin Q'

-OH, -SH, $-NH_2$, -NHR' oder -COOH darstellt , auch mit Polymeren umgesetzt werden, die $-CH_2\underset{\diagdown O \diagup}{CH-CH_2}$-Gruppen aufweisen.

Es ist auch möglich, die Methoden 1) und 2) zu kombinieren, indem man zuerst nach der Aufbau-Methode ein Copolymeres mit geeigneten funktionellen Gruppen und 0,01 bis 10 Prozent seitenständigen Farbstoffgruppierungen der Formel I oder 30 bis 99,99 Prozent seitenständigen Imidylgruppen der Formel II (bezogen auf die Anzahl der wiederkehrenden Strukturelemente des Copolymeren) herstellt und anschliessend nach der Einbau-Methode eine Verbindung der Formel IIb in einem Verhältnis von 99,99 : 100 bis 3:10 bzw. eine Verbindung der Formel Ib in einem Verhältnis von 0,01 : 100 bis 1:10 mit dem Copolymeren zur Reaktion bringt, wobei sich die angegebenen Verhältnisse auf die Anzahl der wiederkehrenden Strukturelemente des Ausgangs-Copolymeren beziehen.

Definitionsgemässe Alkyl-, Alkoxy- oder Alkanoylaminogruppen G, $G_1$, X, $X_1$, $X_2$, Y, $Y_1$, R oder $R_1$ können geradkettig oder verzweigt sein. Alkylgruppen G, $G_1$, X, $X_1$, $X_2$, $Y_1$ und $R_1$ sowie Alkoxygruppen Y und Alkanoylaminogruppen $Y_1$ sind bevorzugt geradkettig. Als Alkylgruppen R werden geradkettige oder verzweigte Alkylgruppen mit bis zu 12 C-Atomen bevorzugt.

Als Beispiele definitionsgemässer Alkyl-, Alkoxy- oder Alkanoylaminogruppen G, $G_1$, X, $X_1$, $X_2$, Y, $Y_1$, R oder $R_1$ seien genannt: die Methyl-, Aethyl-, n-Propyl-, Isopropyl-, n-Butyl-, sek-Butyl-, n-Pentyl-, 2- oder 3-Pentyl-, n-Hexyl-, n-Heptyl-, 2- oder 3-Heptyl-, n-Octyl-, n-Nonyl-, n-Decyl-, 2-Decyl-, n-Dodecyl-, n-Tridecyl-, 2,6,10-Trimethyldodecyl- und n-Hexadecylgruppe; die Methoxy-, Aethoxy-, n-Propoxy-, Isopropoxy-, n-Butoxy-, n-Pentyloxy-, n-Hexyloxy- und n-Octyloxygruppe; die Acetylamino-, Propionylamino-, Butyrylamino-, Valeroylamino- und Hexanoylaminogruppe.

Stellen X, $X_1$ und/oder $X_2$ Halogenatome dar, so handelt es sich z.B. um Fluor oder Jod, besonders aber Chlor oder Brom.

G und $G_1$ stellen bevorzugt zusammen Trimethylen oder Tetramethylen, besonders jedoch je Methyl dar. Alkyl-, Alkoxy- oder Alkanoylaminogruppen X, $X_1$, $X_2$, Y, $Y_1$ und $R_1$ sind bevorzugt geradkettig und weisen je 1-4, besonders 1 oder 2 C-Atome im Alkylteil auf. R stellt bevorzugt geradkettiges Alkyl mit 1-6 und insbesondere 2 C-Atomen dar.

Als Beispiele definitionsgemässer Alkylengruppen $R_2$ seien erwähnt: die 1,2-Aethylen-, Propylen-, Tetramethylen-, Isobutylen-, Pentamethylen-, Iso- und Neopentylen-, Hexamethylen-, Heptamethylen-, 2- oder 3-Methylhexylen-, Octamethylen-, Nonamethylen-, Decamethylen-, 2-Methylnonylen-, Dodecamethylen-, Tridecamethylen-, 2-Hexylheptylen-, 3-Octylnonylen-, 2,6,10-Trimethyldecylen-, 2,6,10,14-Tetramethyldodecylengruppen und die Gruppe $-(CH_2CH_2O)_2CH_2CH_2-$.

Stellt $R_2$ eine Cyclopentylen-, Cyclohexylen- oder Phenylengruppe dar, so handelt es sich z.B. um die 1,3-Cyclopentylen-, 1,3- oder insbesondere 1,4-Cyclohexylen-, 1,3- oder 1,4-Phenylengruppe. Bevorzugt stellt $R_2$ Alkylen mit 2-6 C-Atomen dar.

Die Verbindungen der Formeln Ia und IIa eignen sich zur Homopolymerisation oder zu Copolymerisation mit anderen äthylenisch ungesättigten Comonomeren, besonders solchen der weiter unten angegebenen Art.

Als Beispiele von Ausgangspolymeren, die sich mit Verbindungen der Formel Ib bzw. IIb umsetzen lassen, seien erwähnt: Polyacrylsäure, Polymethacrylsäure, Copolymere aus diesen Säuren und anderen äthylenisch ungesättigten Monomeren, Copolymere aufgebaut aus Maleinsäureanhydrid und äthylenisch ungesättigten Monomeren, wie Methylvinyläther,

Aethylen, Styrol, Hexen-1, Decen-1, Tetradecen-1 und Octadecen-1, Polymere mit freien Hydroxylgruppen, wie Homo- und Copolymere von Acrylsäure- und Methacrylsäurehydroxyalkylestern, Polyvinylalkohole, native und regenerierte Cellulose, Cellulosederivate, Hydroxyalkylcellulose, Polyäther mit freien OH-Gruppen, Polymere mit freien Glycidylgruppen, wie Copolymere auf der Basis von Acryl- und Methacrylsäureglycidylestern, Polyäthylenimine und Polymere mit freien seitenständigen Aminogruppen, z.B. Poly-p-aminostyrol.

Bevorzugt sind erfindungsgemässe Polymere mit einem Durchschnittsmolekulargewicht $M_w$ von 30 000 bis 5 000 000, besonders 50 000 bis 2 000 000, die einerseits wiederkehrende Strukturelemente mindestens einer der Formeln IIIa bis Va

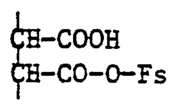 (IIIa), 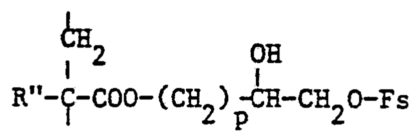 (IVa)

oder 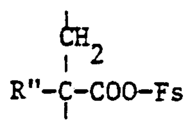 (Va)

und andererseits wiederkehrende Strukturelemente mindestens der Formeln IIIb bis Xb

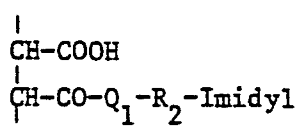 (IIIb),

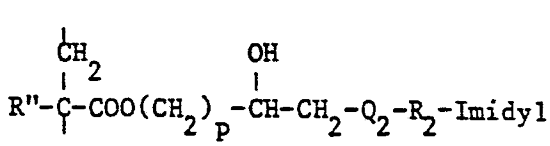 (IVb),

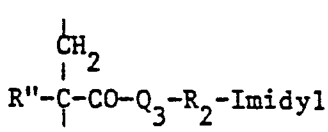 (Vb), 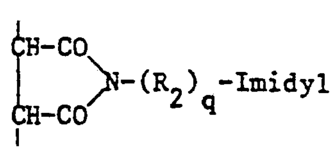 (VIb),

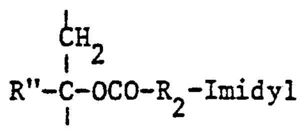 (VIIb), 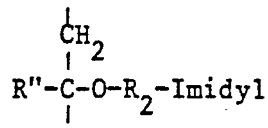 (VIIIb),

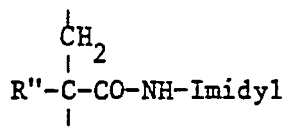 (IXb) oder 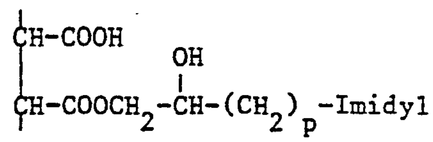 (Xb)

aufweisen, worin

"Fs" einen Rest der Formel I und "Imidyl" einen Rest der Formel II darstellen,

$Q_1$ -O-, -S-, -NH- oder -NR'-,

$Q_2$ -OCO-, -NH-, -NR'-, -O- oder -S-,

$Q_3$ -O- oder -NH-,

R' $C_{1-5}$-Alkyl,

R" Wasserstoff oder Methyl,

q 0 oder 1,

p 1 oder 2 und

$R_2$ gegebenenfalls durch Heteroatome, besonders O-Atome, unterbrochenes und/oder durch Alkyl substituiertes Alkylen mit insgesamt 2-18 C-Atomen und mindestens 2 C-Atomen in der Alkylenkette, $C_{5-6}$-Cycloalkylen oder Phenylen bedeuten.

Bevorzugt sind Polymere mit Gruppierungen der Formeln I und II, insbesondere Polymere mit wiederkehrenden Strukturelementen mindestens einer der Formeln IIIa bis Va und wiederkehrenden Strukturelementen mindestens einer der Formeln IIIb bis Xb, worin X, $X_1$, Y, $Y_1$ und R die unter Formel I angegebene Bedeutung haben, G und $G_1$ je Methyl, $X_2$ $-NO_2$, $R_1$ Wasserstoff oder Methyl und n die Zahl 2 bedeuten. Besonders bevorzugt sind derartige Polymere, worin G und $G_1$ je Methyl, X und $X_1$ unabhängig voneinander Chlor, Brom oder -CN oder X Wasserstoff, Chlor, Brom oder -CN und $X_1$ Wasserstoff, $X_2$ $-NO_2$, Y Wasserstoff, $Y_1$ Wasserstoff oder Methyl, R Aethyl, $R_1$ Wasserstoff und n die Zahl 2 bedeuten.

Handelt es sich bei den erfindungsgemässen Polymeren um Copolymere mit anderen ungesättigten Verbindungen, so bestehen diese bevorzugt aus wiederkehrenden Strukturelementen mindestens einer der Formeln IIIa bis Va und mindestens einer der Formeln IIIb bis Xb und aus wiederkehrenden Strukturelementen der Formel XI

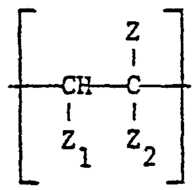

(XI) ,

worin

Z Wasserstoff, Chlor oder Methyl , $Z_1$ Wasserstoff und $Z_2$ Wasserstoff, Methyl, Chlor, -CN, -COOH, $-CONH_2$, Phenyl, Methylphenyl, Methoxyphenyl, Cyclohexyl, Pyridyl, Imidazolyl, Pyrrolidyl, -COO-Alkyl mit 1-12 C-Atomen im Alkyl, -COO-Phenyl, 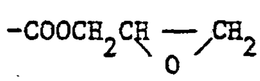, -COO-Alkyl-OH mit 1-3 C-Atomen im Alkyl, -OCO-Alkyl mit 1-4 C-Atomen im Alkyl, -OCO-Phenyl, -CO-Alkyl mit 1-4 C-Atomen im Alkyl, Alkoxy mit 1-20 C-Atomen oder Phenoxy oder Z Wasserstoff und $Z_1$ und $Z_2$ zusammen eine Anhydridgruppierung oder je -COOH oder -COO-Alkyl mit 1-6 C-Atomen im Alkyl darstellen.

In den obigen Formeln IIIa bis Va und IIIb bis Xb haben G, $G_1$, X, $X_1$, $X_2$, Y, $Y_1$, R, $R_1$ und n mit Vorteil die im Vorangehenden angegebenen bevorzugten Bedeutungen. Besonders bevorzugt sind Polymere mit wiederkehrenden Strukturelementen der Formel IIIa oder Va, wiederkehrenden Strukturelementen der Formel IIIb oder Vb und gegebenenfalls wiederkehrenden Strukturelementen der Formel XI, worin R" Wasserstoff oder Methyl, $Q_1$ und $Q_3$ -O-, $R_2$ Alkylen mit 2-6 C-Atomen, Z Wasserstoff oder Methyl, $Z_1$ Wasserstoff und $Z_2$ $-OCOCH_3$, -COOH oder -COO-Alkyl mit 1-8 C-Atomen im Alkyl oder Z und $Z_1$ Wasserstoff, $Z_2$ -CN, Chlor, Phenyl oder Alkoxy mit 1-6 C-Atomen, besonders Methoxy, bedeuten.

Beispiele besonders bevorzugter Polymere sind solche mit einem Durchschnittsmolekulargewicht $M_w$ von 100000-800000 und wiederkehrenden Strukturelementen der Formeln XII, XIII und XIV

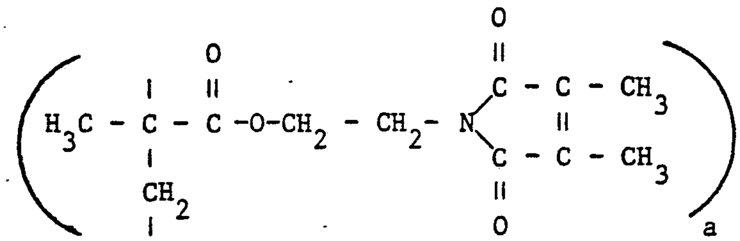

(XII),

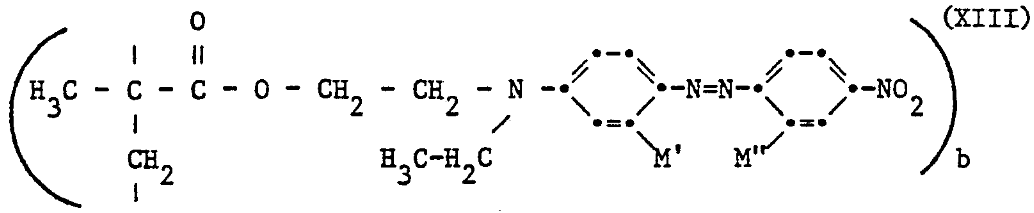

(XIII),

worin M' Wasserstoff oder Methyl und M" Wasserstoff oder Chlor bedeuten, und

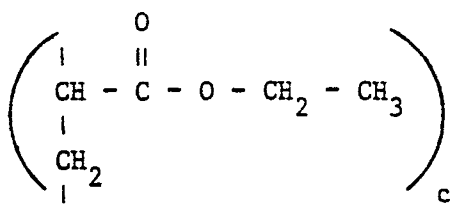

(XIV),

wobei $\frac{a}{a+b+c} = 0{,}5$ bis $0{,}9$ , $\frac{b}{a+b+c} = 0{,}001$ bis $0{,}01$

und $\frac{c}{a+b+c} = 0{,}1$ bis $0{,}5$, insbesondere ein Polymer mit einem

Durchschnittsmolekulargewicht $M_w$ von 400000 und wiederkehrenden Strukturelementen der Formeln XII, XIII, worin M' Wasserstoff und M" Chlor bedeuten, und XIV, wobei

$\frac{a}{a+b+c} = 0{,}799$, $\frac{b}{a+b+c} = 0{,}0013$ und $\frac{c}{a+b+c} = 0{,}1997$.

Polymere, die einerseits wiederkehrende Strukturelemente der Formel Va und andererseits wiederkehrende Strukturelemente mindestens einer der Formeln Vb, VIb, VIIb, VIIIb oder IXb aufweisen, können z.B. dadurch erhalten werden, dass man eine Verbindung der Formel Ia, worin X, $X_1$, $X_2$, Y, $Y_1$, R, $R_1$ und n die unter Formel I angegebene Bedeutung haben und R" Wasserstoff oder Methyl darstellt, und eine Verbindung der Formel IIa, worin für "Imidyl", $R_2$ und q das oben Angegebene gilt und Q bei q = 0

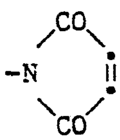 oder -NHCO-C(R")=$CH_2$ und bei q = 1 -CO-O-C(R")=$CH_2$,

-O-C(R")=$CH_2$ -O-CO-C(R")=$CH_2$, -NHCO-C(R")=$CH_2$ oder 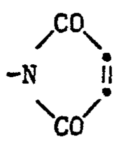

und R" Wasserstoff oder Methyl bedeuten, gegebenenfalls in Gegenwart eines äthylenisch ungesättigten Comonomeren, besonders solchen der Formel XIa

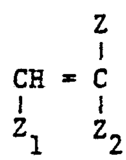 (XIa) ,

polymerisiert, wobei Z, $Z_1$ und $Z_2$ die oben angegebene Bedeutung haben und in Bezug auf die Molverhältnisse der Reaktionskomponenten das im Vorangehenden Erwähnte gilt.

Polymere, die einerseits wiederkehrende Strukturelemente mindestens einer der Formeln IIIa, IVa oder Va und andererseits wiederkehrende Strukturelemente mindestens einer der Formeln IIIb, IVb, Vb, VIIb und Xb aufweisen, können z.B. dadurch erhalten werden, dass man gleichzeitig oder stufenweise

i) eine Verbindung der Formeln Ib und IIb, worin "Imidyl", X, $X_1$, $X_2$, Y, $Y_1$, R, $R_1$, $R_2$, n und q die angegebene Bedeutung haben und Q' bei

q = O 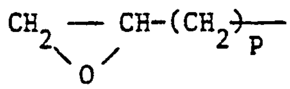 und bei q = 1 -OH, -SH, $-NH_2$ oder

-NHR' bedeutet, mit einem Polymeren mit wiederkehrenden Strukturelementen der Formel III

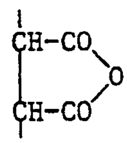 (III),

ii) eine Verbindung der Formeln Ib und IIb, worin "Imidyl", X, $X_1$, $X_2$, Y, $Y_1$, R, $R_1$, $R_2$ und n die angegebene Bedeutung haben, q = 1 ist und Q' -OH, -SH, $-NH_2$, -NHR' oder -COOH bedeutet, mit einem Polymeren mit wiederkehrenden Strukturelementen der Formel IV

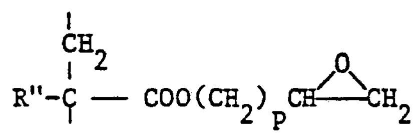 (IV) ,

iii) eine Verbindung der Formeln Ib und IIb, worin "Imidyl", X, $X_1$, $X_2$, Y, $Y_1$, R, $R_1$, $R_2$ und n die angegebene Bedeutung haben, q = 1 ist und Q' -OH oder $-NH_2$ darstellt, mit einem Polymeren mit wiederkehrenden Strukturelementen der Formel V

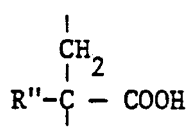 (V) oder

iv) eine Verbindung der Formel IIb, worin "Imidyl" und $R_2$ die angegebene Bedeutung haben, q = 1 ist und Q' -COOH oder -COCl darstellt, mit einem Polymeren mit wiederkehrenden Strukturelementen mindestens einer der Formeln IIIa, IVa oder Va und wiederkehrenden Strukturelementen der Formel VII

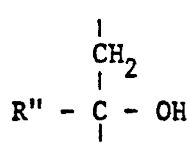 (VII)

zur Reaktion bringt, wobei p, R' und R" die oben angegebene Bedeutung haben und in Bezug auf die (Mol)Verhältnisse der Reaktionskomponenten das im Vorangehenden Gesagte gilt.

Für den Einbau in bestehende Polymere können wahlweise auch Copolymere, z.B. Polymere mit verschiedenen wiederkehrenden Strukturelementen der Formeln III, IV, V, VII und XI, mit Verbindungen der Formel Ib bzw. IIb mit entsprechenden funktionellen Gruppen eingesetzt werden.

Der Einbau der Farbstoff- und Imidylgruppierungen in bestehende Polymerketten mittels Kondensations- oder Additionsreaktion kann auf an sich bekannte Weise erfolgen, zweckmässig bei Temperaturen von etwa -50°C bis +150°C. Die Umsetzung wird vorzugsweise in einem inerten organischen Lösungsmittel oder Lösungsmittelgemisch durchgeführt, für Kondensationsreaktionen bevorzugt bei Temperaturen von etwa -20°C bis +100°C. Additionsreaktionen werden zweckmässig bei erhöhter Temperatur, im allgemeinen bei Temperaturen zwischen etwa 80 und 120°C oder bei Rückflusstemperatur vorgenommen. Geeignete Lösungsmittel zur Durchführung der Kondensations- und Additionsreaktionen sind z.B. aliphatische oder cyclische Ketone, wie Aceton, Methyläthylketon, Isopropylmethylketon, Cyclohexanon, Cyclopentanon und γ-Butyrolacton; cyclische Aether, wie Tetrahydrofuran, Tetrahydropyran oder Dioxan; cyclische Amide, wie N-Methyl-2-pyrrolidon, N-Aethyl-2-pyrrolidon oder N-Methyl-ε-caprolactam; N,N-Dialkylamide von aliphatischen Monocarbonsäuren mit 1-3 C-Atomen im Säureteil, wie N,N-Dimethylformamid, N,N-Dimethylacetamid, N,N-Diäthylacetamid, N,N-Dimethylmethoxyacetamid; Pyridin und Pyridinbasen oder tertiäre Amine, vor allem Trialkyl- und Dialkylbenzylamine mit bevorzugt 1-4 C-Atomen in den Alkylteilen, z.B. Triäthylamin und Diäthylbenzylamin; Dialkylsulfoxide, wie Dimethyl- und Diäthylsulfoxid. Bevorzugte Lösungsmittel für Kondensationsreaktionen sind cyclische Amide und N,N-Dialkylamide

der vorerwähnten Art, besonders N-Methyl-2-pyrrolidon, N,N-Dimethylformamid und N,N-Dimethylacetamid. Für Additionsreaktionen werden cyclische Aether und cyclische Ketone, vor allem Tetrahydrofuran und Cyclohexanon, sowie Pyridin bevorzugt.

Die Polymerisation von Verbindungen der Formeln Ia und IIb sowie deren Copolymerisation mit anderen äthylenisch ungesättigten Monomeren, z.B. solchen der Formel XIa, können ebenfalls auf an sich bekannte Weise vorgenommen werden, z.B. in Gegenwart üblicher kationischer und anionischer Initiatoren. Bevorzugt ist die radikalische Polymerisation. Dabei verwendet man zweckmässig etwa 0,01 bis 5 Gew.-%, vorzugsweise 0,01 bis 1,5 Gew.-%, bezogen auf das Gesamtgewicht der Monomeren, an sich bekannter Radikalinitiatoren, wie anorganische oder organische Peroxide oder Azoverbindungen, z.B. Wasserstoffperoxid, Kaliumperoxidisulfat, tert.-Butylhydroperoxid, Di-tert.butylperoxid, Peressigsäure, Benzoylperoxid, Diacylperoxide, Cumolhydroperoxid, tert.-Butylperbenzoat, tert.-Alkylperoxicarbonate und $\alpha,\alpha'$-Azoisobutyronitril. Die Reaktionstemperaturen für die radikalische Polymerisation liegen im allgemeinen zwischen etwa 30 und 100°C. Die radikalische Polymerisation kann aber auch in der Kälte durchgeführt werden, wozu man auch Redoxsysteme in den oben genannten Konzentrationen verwenden kann, beispielsweise Gemische aus Peroxiden, wie Wasserstoffperoxid, und einem Reduktionsmittel, wie zweiwertige Eisenionen. Die Polymerisation kann in homogener Phase, z.B. in Substanz (Blockpolymerisation) oder in Lösung oder in heterogener Phase, d.h. als Fällungspolymerisation, Emulsions- oder Suspensionspolymerisation, erfolgen. Bevorzugt ist die Polymerisation in Lösung. Geeignete Lösungsmittel sind solche der bei der Kondensations-, bzw. Additionsreaktion erwähnten Art sowie: halogenierte aliphatische Kohlenwasserstoffe, wie Methylenchlorid, Chloroform, Tetrachloräthan und Tetrachloräthylen; Alkylester von aliphatischen Monocarbonsäuren mit insgesamt 2-6 C-Atomen, wie Ameisen- oder Essigsäuremethyl-, -äthyl- und -n-butylester; Aethylenglykoldialkyläther mit 1-4 C-Atomen in den Alkylteilen, wie Aethylenglykoldimethyl-, -diäthyl- und -di-n-butyläther und Aethylenglykolmonoäthermonoester, wie Aethylenglykolmonoäthyläthermonoacetat.

Die Verbindungen der Formeln IIa und IIb sind an sich bekannt oder können nach den in der deutschen Offenlegungsschrift 2.626.795 beschriebenen Verfahren hergestellt werden. Die Verbindungen der Formeln Ia und Ib sind ebenfalls bekannt oder können nach an sich bekannten Methoden hergestellt werden; vgl. z.B. britische Patentschrift 1.261.350, französische Patentschriften 1.437.640, 1.446.006 und 1.480.621, belgische Patentschrift 645.458 und US Patentschrift 3.507.850.

Die erfindungsgemässen gefärbten Polymeren können - gegebenenfalls unter Zumischen üblicher Zusätze, wie Sensibilisatoren, vor allem Thioxanthonen oder Thioxanthonderivaten - z.B. zur Erzeugung von hoch lichtempfindlichen gefärbten Bildmaterialien, wie Reprovorlagen, oder zur Herstellung von Druckplatten für das Offsetdruckverfahren, zur Herstellung von Photooffset-Lacken, für die unkonventionelle Photographie, z.B. zur Herstellung von photographischen Bildern mittels Photopolymerysation oder Photovernetzung verwendet werden. Sie finden insbesondere Anwendung als gefärbte Photoresists zur Herstellung von gedruckten Schaltungen nach an sich bekannten Methoden. Dabei wird die mit der lichtempfindlichen Schicht versehene Seite der Leiterplatte durch ein das Leiterbild aufweisendes Strich- oder Raster-Dianegativ belichtet und dann entwickelt, worauf man die unbelichteten Stellen der Schicht durch Entwicklungsflüssigkeit herausholt.

Dank der kovalenten Bindung der Farbstoffkomponenten an das Polymerrückgrat wird bei den erfindungsgemässen lichtvernetzbaren Polymeren nicht nur ein Ausbluten oder Auswaschen der Farbstoffe vermieden, sondern auch eine den verschiedenen Anwendungen genau angepasste

Einfärbung der Polymeren ermöglicht. Ueberraschenderweise wird dabei die Lichtempfindlichkeit der Polymeren nicht beeinträchtigt.

I. Herstellung der Farbstoffe

In einem 350 ml Sulfierkolben, der mit Rührer, Rückflusskühler, Thermometer und Tropftrichter ausgestattet ist, werden 20,9 g (0,06 Mol) des Farbstoffs der Formel

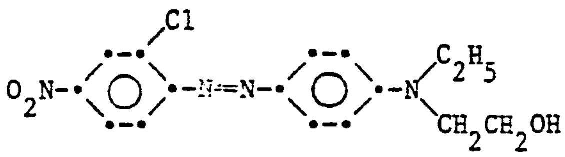

in 265 g Dichlormethan bei Raumtemperatur (20-25°C) gelöst. Zur erhaltenen Lösung werden 10,1 g (0,1 Mol) Triäthylamin hinzugefügt. Unter Einhaltung einer Temperatur von 18-21°C (Eiswasser-Kühlung) wird innerhalb 10 Minuten eine Lösung von 10,45 g (0,1 Mol) Methacrylsäurechlorid in 66 g Dichlormethan zugetropft. Nach Beendigung des Zutropfens wird 1 Stunde bei Raumtemperatur nachgerührt. Anschliessend wird das Reaktionsgemisch auf eine mit 400 g basischem Aluminiumoxid (Woelm) der Aktivitätsstufe I gefüllte Chromatographiesäule aufgezogen. Nach Eluierung mit 2 kg Dichlormethan wird das Eluat zur Trockne eingedampft, wobei 22,5 g (90,5% d.Th.) eines kristallinen, dünnschichtchromatographisch einheitlichen Farbstoffs anfallen. Nach Umkristallisation dieses Produktes aus 500 g Methanol werden 17,6 g (70,4% d.Th.) reiner Farbstoff der Formel

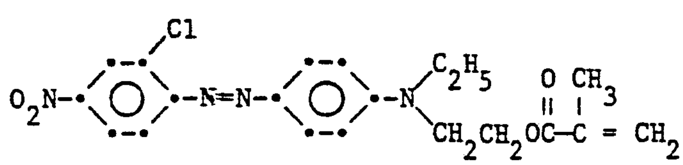

(Farbstoff Nr. 1)

erhalten; Fp. 75-77°C.

| | | | | | |
|---|---|---|---|---|---|
| Analyse: | berechnet | C 57,63% | H 5,08% | N 13,44% | Cl 8,51% |
| | gefunden | C 57, 4% | H 4,9% | N 13,4% | Cl 8,4%. |

BAD ORIGINAL

Auf analoge Weise wie oben beschrieben werden die in der folgenden Tabelle I angeführten Farbstoffe hergestellt.

Tabelle I

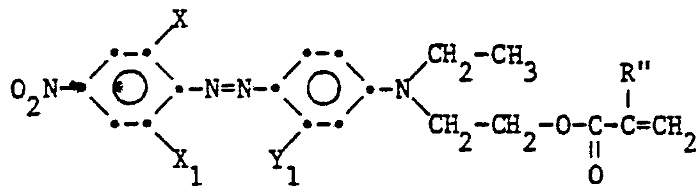

| Farbstoff Nr. | $Y_1$ | X | $X_1$ | R" | °C Fp. | Analyse (%) berechnet | gefunden |
|---|---|---|---|---|---|---|---|
| 2 | $-CH_3$ | -H | -H | $-CH_3$ | 59-62° | C: 63,62<br>H: 6,10<br>N: 14,13 | 63,1<br>6,0<br>13,5 |
| 3 | -H | -C≡N | -H | $-CH_3$ | 106-107° | C: 61,91<br>H: 5,20<br>N: 17,19 | 61,9<br>5,2<br>17,1 |
| 4 | -H | -Br | -Br | $-CH_3$ | 96-98° | C: 44,47<br>H: 3,73<br>N: 10,37<br>Br: 29,58 | 44,2<br>3,9<br>10,2<br>28,9 |
| 5 | -H | -C≡N | -C≡N | $-CH_3$ | 140-142° | C: 61,11<br>H: 4,66<br>N: 19,44 | 59,8<br>4,7<br>17,5 |
| 6 | $-CH_3$ | -H | -H | -H | 99-101° | C: 62,82<br>H: 5,80<br>N: 14,65 | 62,8<br>5,9<br>14,6 |
| 7 | -H | -C≡N | -H | -H | 110° | C: 61,06<br>H: 4,87<br>N: 17,80 | 59,3<br>5,1<br>17,0 |

## II. Herstellung der Polymeren

Beispiele 1-8: 2172,4 g (9,163 Mol) β-(Dimethylmaleinimidyl)-äthylmethacrylat [hergestellt gemäss deutscher Offenlegungschrift 2.626.795] werden mit 229,3 g (2,3 Mol) Acrylsäureäthylester und 36 g (0,086 Mol) des Farbstoffs Nr. 1 in 4,5 Liter 1-Acetoxy-2-äthoxy-äthan unter Stickstoff gelöst. Bei 80°C wird unter Stickstoffatmosphäre eine Lösung von 18 g Azoisobutyronitril in 100 ml 1-Acetoxy-2-äthoxy-äthan zulaufen gelassen. Anschliessend wird während 6 Stunden bei 80°C polymerisiert. Die erhaltene heisse rote Lösung wird mit 12,2 g 2,6-Di--tert-butyl-p-kresol stabilisiert. Viskosität der Lösung, gemessen mit einem Höppler-Kugelfallviskosimeter nach DIN 53015 = 1072 cp. Grenzviskosität $\eta_{grenz}$ = 0,52 dl/g in Chloroform.
Durchschnittliches Molekulargewicht $\overline{M}_w$, bestimmt durch Streulichtmessung in Chloroform = 1 078 204.

Auf analoge Weise werden die in der folgenden Tabelle II angeführten Polymeren hergestellt.

Tabelle II

| Beispiel Nr. | Farbstoff Nr. | Farbstoff Mol. % | Dimethylmaleinimidyl-β-(methacryloyloxy)-äthylester Mol.% | Acrylsäure-äthylester Mol.% | $\overline{M}_w$ |
|---|---|---|---|---|---|
| 2 | 1 | 1,04 | 79,13 | 19,86 | 1 373 000 |
| 3 | 2 | 0,79 | 79,32 | 19,89 | 2 336 506 |
| 4 | 3 | 1,02 | 79,13 | 19,84 | 2 507 704 |
| 5 | 4 | 0,77 | 79,38 | 19,84 | 607 542 |
| 6 | 5 | 0,76 | 82,92 | 16,33 | 358 849 |
| 7 | 6 | 1,01 | 79,23 | 19,76 | 1 235 838 |
| 8 | 7 | 1,06 | 79,20 | 19,75 | 1 540 577 |

Beispiel 9: 30 g eines Copolymerisats aus Methylvinyläther und Maleinsäureanhydrid (1:1, Anhydridgehalt = 0,64 Mol. $\overline{M}_w$ = 740 000) und 25,35 g (0,15 Mol) N-Hydroxyäthyl-dimethylmaleinimid werden in 500 ml Tetrahydrofuran und 25 ml Pyridin gelöst. Der Reaktionslösung werden 1,66 g (0,0048 Mol) 2-Chlor-4-nitro-4'-N-äthyl-N-β-hydroxyäthylamino-azobenzol zugegeben, worauf man 72 Stunden bei 66°C rührt. Die entstandene rote Lösung wird auf Diäthyläther gefällt, und das ausgefallene rote Pulver wird im Vakuum getrocknet.

III. Anwendungsbeispiele (Erzeugung von Abbildungen)

a) Die gemäss Beispiel 1 hergestellte Polymerlösung wird durch Zugabe von 2,5 Gew.% Thioxanthon, bezogen auf den Feststoffgehalt, sensibilisiert. Dann wird die Lösung so auf ein kupferkaschiertes Epoxilaminat aufgeschleudert, dass nach dem Trocknen ein ca. 5 µ dicker Film entsteht. Die so beschichtete Platte wird durch eine Negativvorlage (Stufenkeil Stouffer 21-Step-Sensitivity Guide) mit einer 400 Watt Quecksilberhochdrucklampe (Abstand Vakuumpressrahmen mit Pyrexfilter zur Lampe ca. 60 cm) während 3 Minuten belichtet. Dann wird die Platte in 1,1,1-Trichloräthan so lange entwickelt, bis das gut sichtbare, rote Negativbild sauber erscheint. Die letzte abgebildete Stufe ist die Stufe 6.

Auf analoge Weise wurden die Polymeren gemäss den Beispielen 2-8 geprüft. Die Resultate sind wie folgt:

| Polymer gemäss Beispiel | letzte abgebildete Stufe nach 3 Minuten Belichtung |
|---|---|
| 2 | 6 |
| 3 | 7 |
| 4 | 7 |
| 5 | 4 |
| 6 | 5 |
| 7 | 4 |
| 8 | 4 |

Die auf Grund der unterschiedlichen Substituenten am Farbstoffgerüst erzielten Farbtöne reichen von Gelb (Farbstoff Nr. 4 ) über Rot (Farbstoff Nr. 1 ) bis tief violett (Farbstoff Nr. 5 )

b) Eine Lösung bestehend aus 10 g des Polymeren gemäss Beispiel 9 und 0,1 g Thioxanthon-1-carbonsäuremethylester in 50 ml N,N-Dimethylformamid wird auf ein Polyesterträgermaterial aufgetragen. Mit einem 5000 Watt Metallhalogenid-Brenner wird aus einer Entfernung von 80 cm ein Negativ einer gedruckten Schaltung abgebildet. Die Entwicklung erfolgt in 2,5%iger $NaHCO_3$-Lösung. Die Bildervorlage wird bei einer Belichtungsdauer von 1 Minute sauber abgebildet.

Patentansprüche:

1. Gefärbte lichtvernetzbare Polymere, deren Durchschnittsmolekulargewicht $M_w$ mindestens 5000 beträgt und die seitenständige Farbstoffgruppierungen der Formel I

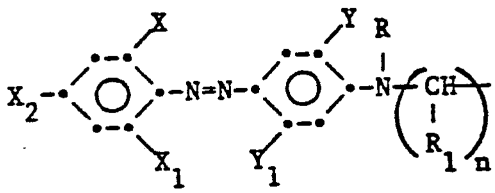

(I)

und seitenständige Imidylgruppierungen der Formel II

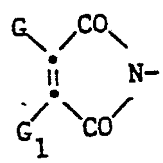

(II)

aufweisen, worin G und $G_1$ unabhängig voneinander $C_{1-4}$-Alkyl oder zusammen gegebenenfalls durch Methyl substituiertes Trimethylen oder Tetramethylen,

X, $X_1$ und $X_2$ unabhängig voneinander Wasserstoff, Halogen, $C_{1-8}$-Alkyl, $-CN$, $-CF_3$ oder $-NO_2$,

Y Wasserstoff oder $C_{1-8}$-Alkoxy,

$Y_1$ Wasserstoff, $C_{1-8}$-Alkyl, $C_{2-8}$-Alkanoylamino oder Benzoylamino,

R $C_{1-16}$-Alkyl,

$R_1$ Wasserstoff oder $C_{1-8}$-Alkyl und

n eine ganze Zahl von 1-6 bedeuten, wobei der Anteil an Gruppierungen der Formel I 0,01 bis 10 Prozent und der Anteil an Gruppierungen der Formel II 30 bis 99,99 Prozent, bezogen auf die Anzahl der wiederkehrenden Strukturelemente des Polymeren, betragen.

2. Polymere nach Anspruch 1, worin der Anteil an Gruppierungen der Formel I 0,5 bis 5 und der Anteil an Gruppierungen der Formel II 30 bis 99,5 Prozent, bezogen auf die Anzahl der wiederkehrenden Strukturelemente des Polymeren, betragen.

3. Polymere nach Anspruch 1 mit einem durchschnittlichen Molekulargewicht $M_w$ von 30 000 bis 5 000 000, besonders 50 000 bis 2 000 000, die einerseits wiederkehrende Strukturelemente mindestens einer der Formeln IIIa bis Va

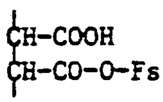 (IIIa), 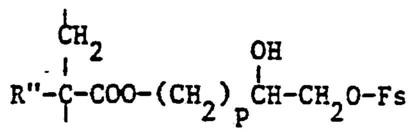 (IVa)

oder 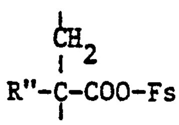 (Va)

und andererseits wiederkehrende Strukturelemente mindestens einer der Formeln IIIb bis Xb

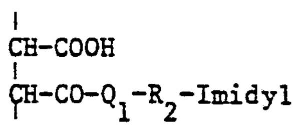 (IIIb),

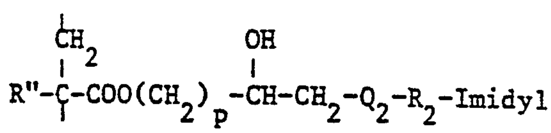 (IVb),

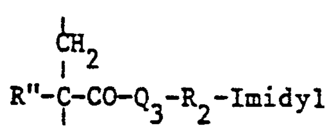 (Vb), 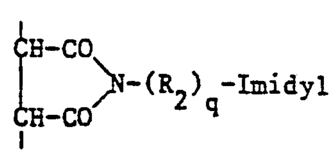 (VIb),

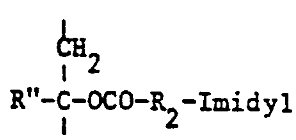 (VIIb), 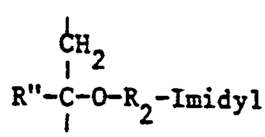 (VIIIb),

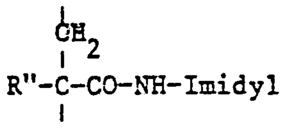 (IXb) oder 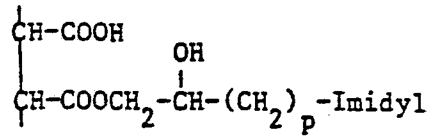 (Xb)

aufweisen, worin

"Fs" einen Rest der Formel I und "Imidyl" einen Rest der Formel II darstellen,

$Q_1$ -O-, -S-, -NH- oder -NR'-,

$Q_2$ -OCO-, -NH-, -NR'-, -O- oder -S-,

$Q_3$ -O- oder -NH-,

R' $C_{1-5}$-Alkyl,

R" Wasserstoff oder Methyl,

q 0 oder 1,

p 1 oder 2 und

$R_2$ gegebenenfalls durch Heteroatome unterbrochenes und/oder durch Alkyl substituiertes Alkylen mit insgesamt 2-18 C-Atomen und mindestens 2 C-Atomen in der Alkylenkette, $C_{5-6}$-Cycloalkylen oder Phenylen bedeuten.

4. Polymere nach Anspruch 1 oder 3, worin X, $X_1$, Y, $Y_1$ und R die unter Formel I angegebene Bedeutung haben, G und $G_1$ je Methyl, $X_2$ $-NO_2$, $R_1$ Wasserstoff und n die Zahl 2 bedeuten.

5. Polymere nach Anspruch 1 oder 3, worin G und $G_1$ je Methyl, X und $X_1$ unabhängig voneinander Chlor, Brom oder -CN oder X Wasserstoff, Chlor, Brom oder -CN und $X_1$ Wasserstoff, $X_2$ $-NO_2$, Y Wasserstoff, $Y_1$ Wasserstoff oder Methyl, R Aethyl, $R_1$ Wasserstoff und n die Zahl 2 bedeuten.

6. Polymere nach einem der Ansprüche 1-5, die aus wiederkehrenden Strukturelementen mindestens einer der Formeln IIIa bis Va und mindestens einer der Formeln IIIb bis Xb sowie aus wiederkehrenden Strukturelementen der Formel XI

0048214

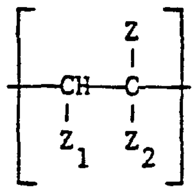

(XI) ,

bestehen, worin

Z Wasserstoff, Chlor oder Methyl, $Z_1$ Wasserstoff und $Z_2$ Wasserstoff, Methyl, Chlor, -CN, -COOH, $-CONH_2$, Phenyl, Methylphenyl, Methoxyphenyl, Cyclohexyl, Pyridyl, Imidazolyl, Pyrrolidyl, -COO-Alkyl mit 1-12 C-Atomen im Alkyl, -COO-Phenyl, 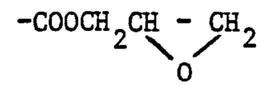, -COO-Alkyl-OH mit 1-3 C-Atomen im Alkyl, -OCO-Alkyl mit 1-4 C-Atomen im Alkyl, -OCO-Phenyl, -CO-Alkyl mit 1-4 C-Atomen im Alkyl, Alkoxy mit 1-20 C-Atomen oder Phenoxy oder Z Wasserstoff und $Z_1$ und $Z_2$ zusammen eine Anhydridgruppierung oder je -COOH oder -COO-Alkyl mit 1-6 C-Atomen im Alkyl darstellen.

7. Polymere nach einem der Ansprüche 3-6, die wiederkehrende Strukturelemente der Formel IIIa oder Va, wiederkehrende Strukturelemente der Formel IIIb oder Vb und gegebenenfalls wiederkehrende Strukturelemente der Formel XI aufweisen, worin R" Wasserstoff oder Methyl, $Q_1$ und $Q_3$ -O-, $R_2$ Alkylen mit 2-6 C-Atomen, Z Wasserstoff oder Methyl, $Z_1$ Wasserstoff und $Z_2$ $-OCOCH_3$, -COOH oder -COO-Alkyl mit 1-8 C-Atomen im Alkyl oder Z und $Z_1$ Wasserstoff und $Z_2$ -CN, Chlor, Phenyl oder Alkoxy mit 1-6 C-Atomen, besonders Methoxy, bedeuten.

8. Polymere nach Anspruch 7 mit einem Durchschnittsmolekulargewicht $M_w$ von 100000 - 800000 und wiederkehrenden Strukturelementen der Formeln XII, XIII und XIV

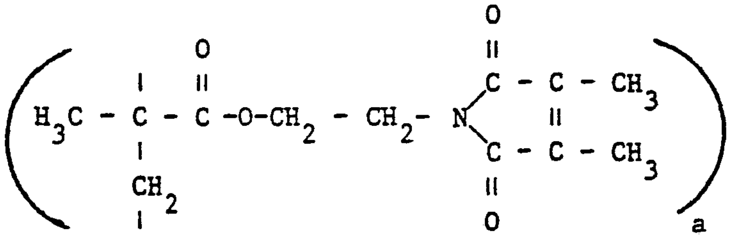

(XII),

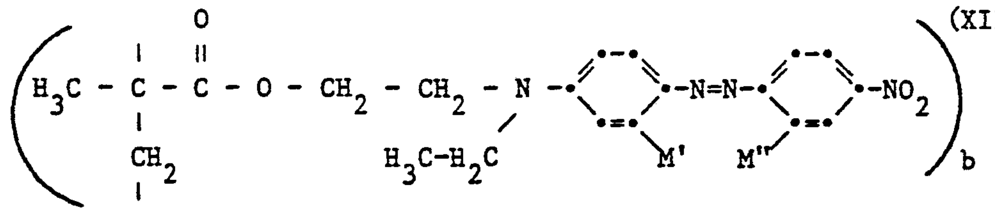

(XIII),

worin M' Wasserstoff oder Methyl und M" Wasserstoff oder Chlor bedeuten, und

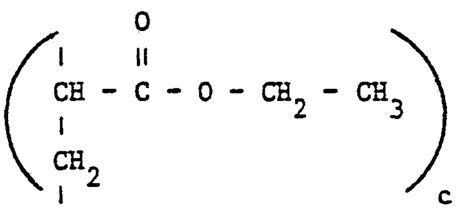

(XIV),

wobei $\frac{a}{a+b+c} = 0{,}5$ bis $0{,}9$ , $\frac{b}{a+b+c} = 0{,}001$ bis $0{,}01$

und $\frac{c}{a+b+c} = 0{,}1$ bis $0{,}5$.

9. Ein Polymer nach Anspruch 8 mit einem Durchschnittsmolekulargewicht $M_w$ von 400000 und wiederkehrenden Strukturelementen der Formeln XII, XIII, worin M' Wasserstoff und M" Chlor bedeuten, und XIV, wobei

$\frac{a}{a+b+c} = 0{,}799$, $\frac{b}{a+b+c} = 0{,}0013$ und $\frac{c}{a+b+c} = 0{,}1997$.

10. Verfahren zur Herstellung eines Polymeren nach Anspruch 1, dadurch gekennzeichnet, dass man entweder

A) eine Verbindung der Formel Ia

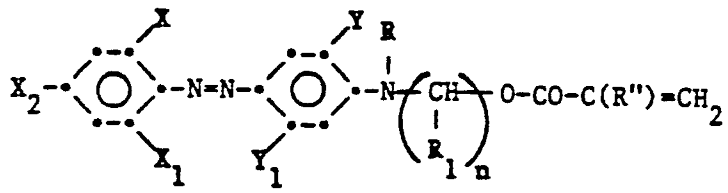 (Ia) ,

worin für X, $X_1$, $X_2$, Y, $Y_1$, R, $R_1$ und n das unter Formel I Angegebene gilt und R" Wasserstoff oder Methyl bedeutet, und eine Verbindung der Formel IIa

$$\text{Imidyl-}(R_2)_q\text{-Q} \qquad \text{(IIa)} ,$$

worin "Imidyl" einen Rest der Formel II darstellt,

$R_2$ gegebenenfalls durch Heteroatome unterbrochenes und/oder durch Alkyl substituiertes Alkylen mit insgesamt 2-18 C-Atomen und mindestens 2 C-Atomen in der Alkylenkette, $C_{5-6}$-Cycloalkylen oder Phenylen,

q 0 oder 1 und

Q bei q = 0 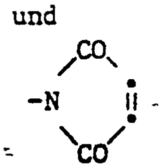 oder -NHCO-Alkenyl und bei q = 1 -CO-O-Alkenyl, -O-Alkenyl, -O-CO-Alkenyl, -NHCO-Alkenyl oder 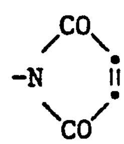 bedeuten, wobei Alkenylteile 2-4 C-Atome aufweisen,

gegebenenfalls in Gegenwart von Comonomeren polymerisiert, wobei das Molverhältnis von Verbindung der Formel Ia + Verbindung der Formel IIa zu Comonomeren 30,01 : 69,99 bis 100 : 0 und das Molverhältnis von Verbindung der Formel Ia zu Verbindung der Formel IIa 0,01 : 99,99 bis 1:3 betragen, oder

B) eine Verbindung der Formel Ib

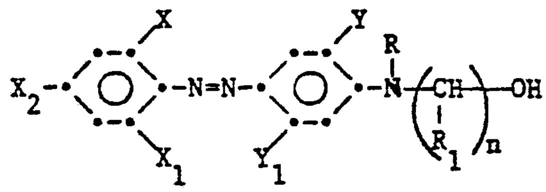

(Ib) ,

worin für X, $X_1$, $X_2$, Y, $Y_1$, R, $R_1$ und n das unter Formel I Angegebene gilt, und eine Verbindung der Formel IIb

$$\text{Imidyl}-(R_2)_q-Q' \qquad \text{(IIb)} ,$$

worin "Imidyl" einen Rest der Formel II darstellt,

$R_2$ gegebenenfalls durch Heteroatome unterbrochenes und/oder durch Alkyl substituiertes Alkylen mit insgesamt 2-18 C-Atomen und mindestens 2 C-Atomen in der Alkylenkette, $C_{5-6}$-Cycloalkylen oder Phenylen,

q 0 oder 1 und

Q' bei q = 0 $-(CH_2)_p-CH\overset{O}{-}CH_2$ mit p = 1 oder 2 und bei

q = 1 $-OH$, $-SH$, $-NH_2$, $-NHR'$, $-COOH$ oder $-COCl$ mit

R' = $C_{1-5}$-Alkyl bedeuten,

mit einem Polymeren mit entsprechenden funktionellen Gruppen in einem Verhältnis von Verbindung der Formel Ib + Verbindung der Formel IIb von 30,01 : 100 bis 1:1, bezogen auf die Anzahl der wiederkehrenden Strukturelemente des Polymeren, zur Reaktion bringt, wobei das Molverhältnis von Verbindung der Formel Ib zu Verbindung der Formel IIb 0,01 : 99,99 bis 1:3 beträgt.

11. Verwendung von Polymeren gemäss Anspruch 1 zum Erzeugen von Abbildungen.